(19)

Europäisches
Patentamt
European
Patent Office
Office européen
des brevets

(11)   **EP 4 560 032 A1**

(12)   **EUROPEAN PATENT APPLICATION**
published in accordance with Art. 153(4) EPC

(43) Date of publication:
**28.05.2025 Bulletin 2025/22**

(21) Application number: **23857402.4**

(22) Date of filing: **24.08.2023**

(51) International Patent Classification (IPC):
*C21D 8/12* (2006.01)   *C22C 38/00* (2006.01)
*C22C 38/60* (2006.01)   *H01F 1/147* (2006.01)

(52) Cooperative Patent Classification (CPC):
**C21D 8/12; C22C 38/00; C22C 38/60; H01F 1/147**

(86) International application number:
**PCT/JP2023/030414**

(87) International publication number:
**WO 2024/043294 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2022 JP 2022133154**

(71) Applicant: **JFE Steel Corporation
Tokyo 100-0011 (JP)**

(72) Inventors:
• **SHINGAKI Yukihiro
Tokyo 100-0011 (JP)**
• **SHIMOYAMA Yusuke
Tokyo 100-0011 (JP)**
• **YAMADA Kuni
Tokyo 100-0011 (JP)**

(74) Representative: **Grünecker Patent- und
Rechtsanwälte
PartG mbB
Leopoldstraße 4
80802 München (DE)**

(54) **METHOD FOR PRODUCING GRAIN-ORIENTED ELECTROMAGNETIC STEEL SHEET, AND HOT ROLLED SHEET FOR GRAIN-ORIENTED ELECTROMAGNETIC STEEL SHEET**

(57)     Provided is a method for producing a grain-oriented electrical steel sheet, including performing hot rolling on a steel slab, which contains, in mass%, C: 0.03 to 0.08%, Si: 2.0 to 5.0%, Mn: 0.005 to 1.0%, Al: less than 0.010%, N: 0.006% or less, O: 0.0060% or less, and S and Se (in terms of S+0.405×Se) in the range of 0.0015 to 0.0060%, and then performing hot-rolled sheet annealing, cold rolling, decarburization annealing doubling as primary recrystallization annealing, and finishing annealing. Specifically, at least two consecutive passes of the hot rolling are performed in the temperature range of 1050 to 1150°C, the interval between the two passes is set to 60 seconds or less, the rolling reduction in each pass is set to 20% or more, and the strain rate in each pass is set to 15 s$^{-1}$ or more so that fractures during the cold rolling are prevented. Also provided is a hot-rolled sheet used for such a production method.

[Fig. 2]

**Description**

Technical Field

The present invention relates to a method for producing a grain-oriented electrical steel sheet that is excellent in both cold rollability and magnetic property, and a hot-rolled steel sheet used for such a production method. Note that in the present invention, the hot-rolled steel sheet is also referred to as a "hot-rolled sheet."

Background Art

Grain-oriented electrical steel sheets are typically produced in which Goss-oriented grains ({110}<001>) are preferentially caused in the final finishing annealing step by the use of precipitates called inhibitors. As the inhibitors, for example, Patent Literature 1 proposes using AlN and MnS, and Patent Literature 2 proposes using MnS and MnSe, and all of such inhibitors have been put to industrially practical use.

Such a method that involves the use of inhibitors is useful for stably developing secondary recrystallized Goss-orientated grains. However, since the precipitates to act as the inhibitors need to be finely dispersed, it is necessary to heat a slab to a high temperature of 1300°C or higher before hot-rolling the same. Therefore, such a method has problems in that scale loss would increase, which in turn would decrease yields, and further, the cost of thermal energy as well as the facility cost would increase, and the maintenance of the facility would also become complex.

Meanwhile, as a technology for solving such problems, a production method that does not involve the use of inhibitors (inhibitorless method) is proposed. For example, Patent Literature 3 proposes a technology for causing secondary recrystallization by controlling a texture, using a higher-purity steel material containing no inhibitor-forming components. However, when a grain-oriented electrical steel sheet is produced using a steel material containing no inhibitor-forming components, the grain boundary strength decreases due to the high purity of the steel material, and thus, fractures are likely to occur during cold rolling, which is problematic. This has been a cause of impeding the industrial-scale production.

In response to such a problem, Patent Literature 4 proposes a technology for further stabilizing secondary recrystallization as well as suppressing fractures during cold rolling by controlling the recrystallization process after hot rolling.

Citation List

Patent Literature

Patent Literature 1: JP-S40-015644A
Patent Literature 2: JP-S51-013469A
Patent Literature 3: JP-2000-129356A
Patent Literature 4: JP-2003-226916A

Summary of Invention

Technical Problem

The technology disclosed in Patent Literature 4 above is directed to stabilize secondary recrystallization and suppress fractures during cold rolling by controlling the heat history during hot rolling and hot-rolled sheet annealing under specific conditions, and thus obtaining a more uniform crystal structure after the hot-rolled sheet annealing. However, a hot-rolled sheet, which contains no inhibitor-forming components, for a grain-oriented electrical steel sheet is essentially likely to fracture during cold rolling. Thus, it has been impossible to completely prevent fractures during cold rolling by using such a technology alone.

The present invention has been made in view of the above problems of the conventional technologies, and it is an object of the present invention to propose a method for, even when a steel material containing no inhibitor-forming components is used, stably producing a grain-oriented electrical steel sheet with an excellent magnetic property without causing fractures during cold rolling, and to provide a hot-rolled sheet used for such a production method.

Solution to Problem

To solve the above problems, the inventors have conducted concentrated studies about the possible causes of fractures in a hot-rolled sheet containing no inhibitor-forming components during cold rolling. Consequently, the inventors have arrived at the present invention based on the following findings. That is, the inventors found that a decrease in the grain boundary strength due to the high purity of the steel material as well as the presence of sulfide and selenide in the central portion (segregation portion) of the steel sheet in the thickness direction is greatly related to the causes of fractures during cold rolling, and that in order to prevent such fractures due to the presence of sulfide and selenide during cold rolling, it is necessary to further improve the uniformity of the crystal structure obtained through hot-rolled sheet annealing by optimizing the pass schedule of hot rolling and the conditions of the hot-rolled sheet annealing.

The present invention based on the above findings proposes a method for producing a grain-oriented electrical steel sheet, including performing hot rolling on a steel slab having a composition of components including C: 0.03 to 0.08 mass%, Si: 2.0 to 5.0 mass%, Mn: 0.005 to 1.0 mass%, Al: less than 0.010 mass%, N: 0.006 mass% or less, O: 0.0060 mass% or less, and S and Se (in terms of $S+0.405\times Se$) in a range of 0.0015 to 0.0060 mass%, with a balance being Fe and unavoidable impurities so as to obtain a hot-rolled sheet, the hot rolling including at least two consecutive passes performed in a temperature range of 1050 to 1150°C under conditions such that an interval between the two passes is 60 seconds or less, a rolling reduction in each pass is 20% or more, and a strain rate in each pass is 15 s$^{-1}$ or more; subjecting the hot-rolled sheet to hot-rolled sheet annealing; performing cold rolling once or performing cold rolling two or more times with intermediate annealing interposed between each rolling to obtain a cold-rolled sheet; subjecting the cold-rolled sheet to decarburization annealing which acts as primary recrystallization annealing; and performing finishing annealing.

In the method of the present invention for producing a grain-oriented electrical steel sheet, the hot rolling includes at least one pass performed in a temperature range of 850 to 950°C, the hot-rolled sheet annealing after the hot rolling is performed at a temperature of 850°C or higher, and a sum of a cooling time in a temperature range of 750°C to 650°C during a cooling process performed after the hot rolling and a heating time in a temperature range of 600°C to 700°C during a heating process of the hot-rolled sheet annealing is 20 seconds or less.

The method of the present invention for producing a grain-oriented electrical steel sheet further includes, after the at least one pass of the rolling performed in the temperature range of 850 to 950°C, holding the steel sheet as is for 1.0 second or longer.

In the method of the present invention for producing a grain-oriented electrical steel sheet, the steel slab further includes, in addition to the composition of components, at least one group of components selected from the following groups A to C:

- a group A: Ni: 1.50 mass% or less,
- a group B: at least one element selected from the group consisting of Sn: 0.50 mass% or less, Sb: 0.50 mass% or less, Cu: 0.50 mass% or less, Mo: 0.50 mass% or less, Co: 0.0100 mass% or less, P: 0.50 mass% or less, Cr: 1.50 mass% or less, B: 0.0200 mass% or less, and Bi: 0.0200 mass% or less, and
- a group C: at least one element selected from the group consisting of Nb: 0.0200 mass% or less, Ti: 0.0200 mass% or less, Te: 0.0200 mass% or less, Ga: 0.0100 mass% or less, and Zn: 0.500 mass% or less.

In addition, the present invention provides a hot-rolled sheet for a grain-oriented electrical steel sheet, having a composition of components including C: 0.03 to 0.08 mass%, Si: 2.0 to 5.0 mass%, Mn: 0.005 to 1.0 mass%, Al: less than 0.010 mass%, N: 0.006 mass% or less, O: 0.0060 mass% or less, and S and Se (in terms of $S+0.405\times Se$) in a range of 0.0015 to 0.0060 mass%, with a balance being Fe and unavoidable impurities, characterized in that the number density of precipitates each having a major axis of 4 $\mu$m or more among precipitates of sulfide and selenide and complex precipitates of such compounds is 0.30/mm$^2$ or less in a region with a size of 50 mm$^2$ including a central portion of a cross-section of the sheet in a thickness direction along a rolling direction, and having a width that is 1/5 a thickness of the sheet.

The hot-rolled sheet of the present invention further includes, in addition to the composition of components, at least one group of components selected from the following groups A to C:

- a group A: Ni: 1.50 mass% or less,
- a group B: at least one element selected from the group consisting of Sn: 0.50 mass% or less, Sb: 0.50 mass% or less, Cu: 0.50 mass% or less, Mo: 0.50 mass% or less, Co: 0.0100 mass% or less, P: 0.50 mass% or less, Cr: 1.50 mass% or less, B: 0.0200 mass% or less, and Bi: 0.0200 mass% or less, and
- a group C: at least one element selected from the group consisting of Nb: 0.0200 mass% or less, Ti: 0.0200 mass% or less, Te: 0.0200 mass% or less, Ga: 0.0100 mass% or less, and Zn: 0.500 mass% or less.

Advantageous Effects of Invention

According to the present invention, it is possible to improve the cold rollability of a hot-rolled sheet containing no inhibitor-forming components. Thus, a grain-oriented electrical steel sheet with an excellent magnetic property can be stably produced without the occurrence of fractures during cold rolling.

Brief Description of Drawings

[Fig. 1] Fig. 1 is a graph illustrating the results of comparison between the occurrence rate of fractures during cold rolling when the technology of Patent Literature 4 is applied and the occurrence rate of fractures when the conventional technology is applied.
[Fig. 2] Fig. 2 is a graph illustrating the results of comparison between the occurrence rate of fractures during cold rolling when the technology of the present invention is applied and the occurrence rates of fractures when the conventional technology and the technology of Patent Literature 4 are applied.

Description of Embodiments

First, described is a study that motivated the development of the present invention.

The inventors conducted a detailed examination of a coil that had fractured during cold rolling even when applying the technology of Patent Literature 4. Consequently, there was observed a fracture portion in the steel sheet that was separated into two layers, i.e., the front and back sides of the steel sheet.

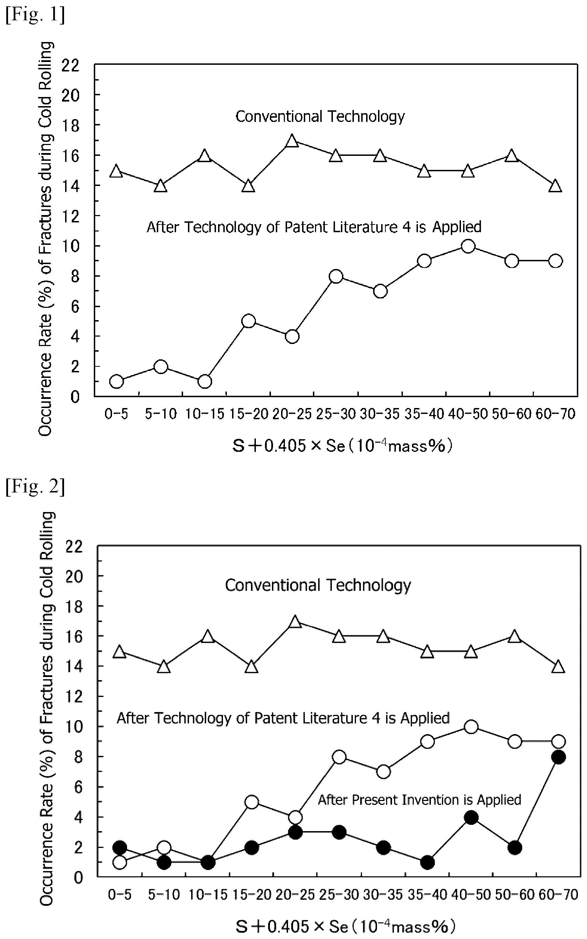

The separation plane was analyzed through element mapping using an EPMA. Then, the separation plane was confirmed to contain a plurality of precipitates of sulfide and selenide. Then, the inventors examined the relationship between the occurrence rate of fractures during cold rolling and a parameter ($S+0.405\times Se$) representing the sum of the number of S and Se atoms. Consequently, it was found that, as illustrated in Fig. 1, the occurrence rate of fractures tends to increase as the content of S and Se (in terms of $S+0.405\times Se$) exceeds 0.0015 mass%, and increases significantly when the content of S and Se is 0.0025 mass% or more. Such a tendency had not been known at all so far, and was newly found in the present invention.

From the results of such examination, the following fracture mechanism was estimated.

In the conventional method for producing a grain-oriented electrical steel sheet without using inhibitors, such as the production method described in Patent Literature 4, for example, secondary recrystallization is caused to occur by appropriately controlling the texture of a hot-rolled sheet, using a higher-purity steel material with each of the content of S and the content of Se reduced to 0.0050 mass% or less. Therefore, it is basically considered that secondary recrystallization will occur more stably as each of the content of S and the content of Se is lower. Thus, each of the content of S and the content of Se is reduced to about 0 to 0.0020 mass% in Patent Literature 4.

S is typically removed by being entrained in slag through a reduction process during a refining step of steelmaking. However, since many elements including C are removed through an oxidation process, so-called "sulfur-returning" may occur such that S that has been removed once returns into steel from slag during an oxidation process. Therefore, to stably reduce S, it is necessary to add a large amount of auxiliary material, resulting in an increase in the production cost. Meanwhile, unlike S, Se is often taken not from a raw material but from scraps used for cost reduction purposes; Se has the same kind of difficulty as S when it comes to the removal thereof. Therefore, to produce a grain-oriented electrical steel sheet, there is used a steel material that contains S and Se within a range causing no adverse effects on secondary recrystallization.

In a method for producing a grain-oriented electrical steel sheet by using inhibitors, it is necessary to completely dissolve inhibitor-forming components, which are contained in a steel material (slab), in steel. Thus, the slab is heated to a high temperature of 1350 to 1450°C before hot rolling. However, when inhibitors are not used, there is no need to completely dissolve inhibitor-forming components unlike with the above method. Thus, the temperature for heating the slab is set to a relatively low temperature of about 1250°C or less that has no adverse effects on hot rolling.

S and Se are also known as elements that are likely to be segregated. For example, when a slab is produced through a continuous casting process, S and Se are segregated in a concentrated manner in the central portion of the finally solidified slab in the thickness direction, and further form precipitates, such as sulfide and selenide. The amounts of such S and Se segregated in the central portion and the precipitates are reduced through dissolution or diffusion as the slab is heated before hot rolling. However, when the content of S and Se is high or when the temperature for heating the slab is low, such sulfide and selenide may remain as precipitates in the central portion of the slab in the thickness direction.

In the portion where fractures occurred during cold rolling, there was observed a portion where the slab was exfoliated into two layers in the central portion thereof along the thickness direction, and there were also observed precipitates of sulfides and selenides in the exfoliation plane. Accordingly, it is considered that the exfoliation occurred starting from the sulfide and selenide remaining in the central portion of the slab in the thickness direction, resulting in a fracture.

Therefore, to prevent fractures during cold rolling, the slab may be heated to allow the inhibitor-forming components to be completely dissolved before the slab is hot-rolled. However, the advantage of the method for producing a grain-oriented electrical steel sheet by using a steel material without inhibitors lies in the fact that the heating temperature for the slab is set low to achieve a reduction in the production cost. Thus, when the slab is heated to a high temperature, such an advantage cannot be enjoyed. Further, to heat the slab to a high temperature, the conventional method that involves the use of inhibitors will suffice.

Thus, the inventors studied not a method for completely dissolving sulfide and selenide, which are present as precipitates around the central portion of a slab in the thickness direction due to central segregation, by heating the slab to a high temperature, but a method for breaking down the precipitates for detoxification purposes during hot rolling. Consequently, the inventors found that such a method can be implemented by performing hot rolling through at least two consecutive passes under high pressure and at a high strain rate, in a specific temperature range and under appropriate conditions.

Typically, it is known that an interface between sulfide or selenide and an iron matrix becomes the starting point of a crack. However, it has been found that not all of the above precipitates of sulfide and selenide have adverse effects on cold rolling, but large precipitates, specifically, precipitates each having a major axis of 4 $\mu$m or more when elongated along the rolling direction through hot rolling particularly have adverse effects on fractures. This is considered to be because the deformability of the precipitates differs from that of the iron matrix, and thus, when steel is elongated through rolling, a shearing force is generated at the large interface, which results in breaking. It was also found that in order to prevent fractures during cold rolling, it is necessary to reduce the number density of precipitates, such as sulfide and selenide, each having a major axis of 4 $\mu$m or more, in a region with a size of 50 mm$^2$ including the central portion of a cross-section of the slab in the thickness direction along the rolling direction, and having a width that is 1/5 the thickness of the slab, to 0.30/mm$^2$ or less.

The present invention has been completed by adding further improvements to the above findings.

Next, described is the composition of components that should be possessed by a steel material used for a method of the present invention for producing a grain-oriented electrical steel sheet.

C: 0.03 to 0.08 mass%

The present invention is characterized in that by performing hot rolling through at least two consecutive passes in a specific temperature range (1050 to 1150°C) and under appropriate conditions, large precipitates of sulfide and selenide that are present in the central portion of a slab are broken down into particles with a major axis of less than 4 $\mu$m, which would hardly cause fractures during cold rolling. Typically, hot rolling of Si-containing steel is performed in the temperature range that allows a single-phase ferrite layer to be substantially formed. However, the above temperature range coincides with the temperature range that allows austenite to be formed, though its amount is small. Thus, the precipitates of sulfide and selenide are more likely to fragment or break for reasons described below. Thus, the content of C is set to 0.03 mass% or more to allow hot rolling to be performed in the two-phase range. Meanwhile, when the content of C is over 0.08 mass%, it is difficult to reduce the content of C to 0.0050 mass% or less at which magnetic aging will not occur even by applying decarburization annealing later. Accordingly, the content of C is set in the range of 0.03 to 0.08 mass%. Preferably, the content of C is set in the range of 0.03 to 0.06 mass%.

Si: 2.0 to 5.0 mass%

Si is an effective element for increasing the specific resistance of steel, and thus reducing iron losses. To fully obtain such an effect, the content of Si needs to be set to at least 2.0 mass%. Meanwhile, when the content of Si is over 5.0 mass%, the steel becomes brittle. Thus, there is an increased risk of significant degradation of cold rollability as well as fractures while the slab is carried into a production facility. Thus, the upper limit of the content of Si is set to 5.0 mass%. Preferably, the content of Si is set in the range of 2.8 to 4.5 mass%.

Mn: 0.005 to 1.0 mass%

Mn has the effect of improving hot workability, and is also a useful element from a perspective of controlling an oxide film formed during primary recrystallization. Thus, the content of Mn is set to 0.005 mass% or more. Meanwhile, when the content of Mn is over 1.0 mass%, the primary recrystallization texture degrades, which in turn degrades the magnetic property. Thus, the upper limit of the content of Mn is set to 1.0 mass%. Preferably, the content of Mn is in the range of 0.01 to 0.5 mass%.

Al: less than 0.010 mass%, N: 0.006 mass% or less

The present invention is directed to a technology for producing a grain-oriented electrical steel sheet by using a steel material containing no inhibitor-forming components. Thus, the upper limit of the content of Al is set to less than 0.010 mass%, and the upper limit of the content of N is set to 0.006 mass% or less. When the content of each of Al and N is over its upper limit, it is difficult to obtain an excellent secondary recrystallization texture even when the texture is controlled. In addition, the content of N needs to be set to 0.006 mass% or less also from a perspective of preventing the generation of Si nitride during purification annealing of the finishing annealing, which would otherwise degrade the magnetic property. Preferably, the content of Al is set to 0.008 mass% or less, and the content of N is set to 0.0050 mass% or less.

O: 0.0060 mass% or less

O will form oxide, and thus will degrade the magnetic property of the final product sheet. Thus, the content of O is limited to 0.0060 mass% or less. Preferably, the content of O is 0.0030 mass% or less.

S+0.405×Se: 0.0015 to 0.0060 mass%

S and Se are detrimental elements in the present invention as such elements will form sulfide and selenide and thus will cause fractures during cold rolling, or will form inhibitors and thus will degrade the magnetic property. Thus, basically, the content of such elements is desirably as low as possible. In particular, to allow secondary recrystallization to stably occur without using inhibitors, it is necessary to set the content of S and Se, in terms of (S+0.405×Se), to 0.0060 mass% or less. However, when the content of S and Se is reduced excessively, the production cost will increase, though there is no adverse effect on the magnetic property or fractures during cold rolling. Thus, the lower limit of (S+0.405×Se) is set to about 0.0015 mass%. Preferably, (S+0.405×Se) is set in the range of 0.0020 to 0.0050 mass%.

The steel material used for the method of the present invention for producing a grain-oriented electrical steel sheet contains the above components, with the balance being basically Fe and unavoidable impurities. Note that the steel material may also contain at least one component selected from among the following components as appropriate.

Ni: 1.50 mass% or less

Ni is a useful element for improving the texture of a hot-rolled steel sheet, and thus improving the magnetic property. To obtain such an effect, it is preferable to add 0.005 mass% or more of Ni. Meanwhile, when Ni is added excessively, stable secondary recrystallization will not occur, which rather degrades the magnetic property. Thus, the upper limit of the content of Ni is preferably set to 1.50 mass%. More preferably, the content of Ni is set in the range of 0.01 to 1.00 mass%.

At least one element selected from the group consisting of Sn: 0.50 mass% or less, Sb: 0.50 mass% or less, Cu: 0.50 mass% or less, Mo: 0.50 mass% or less, Co: 0.0100 mass% or less, P: 0.50 mass% or less, Cr: 1.50 mass% or less, B: 0.0200 mass% or less, and Bi: 0.0200 mass% or less

Each of Sn, Sb, Cu, Mo, Co, P, Cr, B, and Bi is a grain-boundary segregation element, and has the effect of improving the magnetic property. However, when the content of each element is over its upper limit of the above range, the development of secondary recrystallized grains will rather be hindered. Accordingly, when such an element(s) is added, the content of the element is preferably set to its upper limit or less. To reliably obtain the above effect of adding such elements, it is preferable to add Sn: 0.01 mass% or more, Sb: 0.005 mass% or more, Cu: 0.01 mass% or more, Mo: 0.01 mass% or more, Co: 0.0001 mass% or more, P: 0.0050 mass% or more, Cr: 0.01 mass% or more, B: 0.0005 mass% or more, and Bi: 0.0005 mass% or more.

At least one element selected from the group consisting of Nb: 0.0200 mass% or less, Ti: 0.0200 mass% or less, Te: 0.0200 mass% or less, Ga: 0.0100 mass% or less, and Zn: 0.500 mass% or less

Each of Nb, Ti, Te, Ga, and Zn is an element that will form precipitates of carbonitride, and thus is not necessarily needed for a production method that does not involve the use of inhibitors. However, such an element has the effect of improving the magnetic property when it is added in a very small amount within the range that such an element can be dissolved through the heating of the slab to a relatively low temperature. However, when the content of such an element added is over its upper limit, stable secondary recrystallization will not occur. Meanwhile, even when the content of such an element added is within the above range, stable secondary recrystallization may not occur depending on the heating temperature for the slab or the production conditions. Thus, care should be taken when such elements are used. To reliably obtain the above effect of adding such elements, it is preferable to add Nb: 0.0005 mass% or more, Ti: 0.0005 mass% or more, Te: 0.0005 mass% or more, Ga: 0.0001 mass% or more, and Zn: 0.0001 mass% or more.

Next, the method of the present invention for producing a grain-oriented electrical steel sheet will be described.

A steel material (slab) used to produce a grain-oriented electrical steel sheet of the present invention is produced by melting steel, which has been adjusted to have the above composition of components that matches the present invention, using a converter or an electric furnace, for example, and further subjecting the slab to a known refining method including a vacuum degassing process, for example, as appropriate, and then subjecting the slab to a commonly known continuous casting process. Note that a thin cast slab with a thickness of 100 mm or less may be produced using a direct casting method.

Next, the slab is heated to a predetermined temperature before hot roling. Alternatively, the slab may be directly hot-rolled without being heated after the continuous casting process. Herein, the heating temperature for the slab before the hot rolling is preferably set to 1250°C or less. This is because in the case of the components of the slab of the present invention not containing inhibitor-forming components, there is no need to dissolve inhibitor-forming components. However, when the heating temperature for the slab is too low, a load on the hot rolling increases, which in turn may decrease the manufacturing stability. In addition, the heating temperature is preferably set to 1100°C or higher because in the present invention, it is essential to perform hot rolling at 1050°C or higher through at least two consecutive passes as described below.

The slab heated to such a relatively low temperature is subjected to hot rolling including rough rolling and finishing rolling so that a hot-rolled steel sheet (hot-rolled sheet) is formed. However, when the heating temperature for the slab is low as described above, precipitates of sulfide and selenide or complex precipitates of such compounds, which have been segregated and precipitated in the central portion of the slab in the thickness direction during the production of the slab, may remain in the slab without being completely dissolved therein, which in turn may degrade the cold rollability.

Thus, in the present invention, to break down the above large precipitates of sulfide and selenide, which are detrimental to cold rolling, into smaller particles for detoxification purposes, it is necessary to perform the hot rolling through at least two consecutive passes in the temperature range of 1050 to 1150°C, and also set the interval between the two passes to 60 seconds or less, and set the rolling reduction and the strain rate in each of the two passes to 20% or more and 15 $s^{-1}$ or more, respectively.

As described above, for steel containing 0.03 to 0.08 mass% of C, the temperature range of 1050 to 1150°C corresponds to the temperature range in which austenite is formed in ferrite. Since austenite has higher deformation resistance than ferrite, it is less likely to deform even when pressed. Therefore, when austenite is present, ferrite around the austenite is forced to deform in a non-uniform manner. Thus, rolling performed in such a temperature range greatly contributes to breaking down the precipitates, such as sulfide and selenide, that have precipitated in the ferrite into smaller particles. Such an effect of breaking down the precipitates will intensify as the amount of strain added is more. Thus, in the present invention, the rolling reduction of the rolling performed in the above temperature range is set to 20% or more. Preferably, the rolling reduction is set to 25% or more.

However, it is impossible to obtain a sufficient effect only by increasing the rolling reduction for a single pass. This is because when a single pass of rolling is performed under the above condition to effect dislocation, the texture is recovered and the dislocation density is thus reduced soon because the above temperature range is high. Thus, performing rolling through at least two consecutive passes under high pressure in the above temperature range, and setting the interval between the two passes to 60 seconds or less, and also setting the strain rate in each pass to 15 $s^{-1}$ or more can further increase the dislocation density to further promote non-uniform deformation, and thus can break down the large precipitates of sulfide and selenide in the ferrite, into smaller particles. Preferably, the strain rate in each pass is set to 18 $s^{-1}$ or more, and the interval between the passes is set to 50 seconds or less.

Herein, the strain rate is the value calculated with the following Ekelund's formula.

[Formula 1]

$$\dot{\varepsilon} \fallingdotseq \frac{\upsilon_R}{\sqrt{R'h_1}} \frac{2}{2-r} \cdot \sqrt{r}$$

where $v_R$ represents the circumferential speed (mm/s) of a roll, R' represents the radius (mm) of the roll, $h_1$ represents the thickness (mm) on the entry side of the roll, and r represents the rolling reduction(%).

Adopting the above conditions for the hot rolling can break down the large precipitates of sulfide and selenide or the complex precipitates of such compounds, which are present around the central portion of the hot-rolled steel sheet in the thickness direction, into smaller particles. Consequently, it is possible to reduce the number density of precipitates each having a major axis of 4 $\mu$m or more, which are present in the central portion of a cross-section of the sheet in the thickness direction and are detrimental to cold rolling, to 0.30/$mm^2$ or less. More preferably, the number density of the precipitates is 0.1/$mm^2$ or less.

Note that the number density of the precipitates, such as sulfide and selenide, is measured by collecting a test piece from the central portion of the hot-rolled sheet in the width direction, and observing, with a scanning electron microscope (SEM), a region with a size of 50 mm² or more having a width that is 1/10 the thickness of the test piece from the center of a cross-section of the test piece in the thickness direction along the rolling direction on each side in the vertical direction, that is, a region including the central portion of the test piece in the thickness direction and having a width that is 1/5 the thickness of the test piece so as to count the number of precipitates each having a major axis of 4 μm or more among the precipitates of sulfide and selenide and the complex precipitates of such compounds.

Further, at least one pass of the hot rolling is preferably performed in the temperature range of 850°C to 950°C to obtain a uniform grain size distribution of a primary recrystallization texture as disclosed in Patent Literature 4. The reason for obtaining a texture with a uniform grain size distribution will be described. A crystal grain has a characteristic such that as the grain is larger, it grows more easily. However, in the primary recrystallization texture, the energy of a grain boundary between a Goss-orientated grain and the surrounding crystal grains is high, while the energy of a grain boundary between crystal grains other than Goss-orientated grains is low. Thus, obtaining a uniform grain size can allow Goss-orientated grains to be selectively grown by taking the advantage of their grain growth based on the energy difference. However, when the above rolling temperature is over 950°C, it is difficult to accumulate sufficient processing strain due to recovery, which in turn hinders favorable recrystallization. Meanwhile, when the above rolling temperature is less than 850°C, which is too low, recrystallization will hardly occur immediately after the rolling.

In addition, from a perspective of further improving the magnetic property, it is preferable to hold the steel sheet as is for 1.0 second or longer without applying any process thereto after the above pass performed in the temperature range of 850°C to 950°C. Such a pass for holding the steel sheet for 1.0 second or longer after the above pass may be any of the passes of the hot rolling as long as it allows the rolling to be performed in the temperature range of 850 to 950°C and allows the steel sheet to be held for 1.0 second or longer without any process applied thereto after the pass. For example, such a pass is preferably the first pass of the finishing rolling in which the rolling speed is low and a long time remains until the next pass, or the final pass of the finishing rolling after which the time until the start of cooling can be freely set.

The thus obtained hot-rolled steel sheet is cooled to be wound into a coil, and is then subjected to hot-rolled sheet annealing. At this time, to allow the hot-rolled sheet to undergo complete recrystallization, it is important to set the sum of the cooling time in the temperature range of 750°C to 650°C during the cooling process performed after the hot rolling and the heating time in the temperature range of 600°C to 700°C during the heating process that involves the maximum temperature (850°C or higher) of the hot-rolled sheet annealing to 20 seconds or less.

The reason for the above is as follows. When steel containing components including a high content of inhibitor-forming components is used, recovery, that is, the dissipation of processing strain that occurs when a steel sheet is held at a high temperature after hot rolling is at a negligible level. However, if a sheet of steel with reduced inhibitor-forming components such as the one of the present invention is retained in the above temperature range for a long time after hot rolling, recovery suddenly occurs, and processing strain thus dissipates, which makes it difficult to secure a sufficient amount of strain needed for recrystallization in the hot-rolled sheet annealing. Note that the reason that the temperature range in which the cooling time is managed differs from the temperature range in which the heating time is managed is that the temperature range in which processing strain is released slightly differs between the cooling process performed after the hot rolling and the heating process of the hot-rolled sheet annealing.

Further, the maximum temperature of the hot-rolled sheet annealing is preferably set to 850°C or higher from a perspective of promoting recrystallization and highly developing a Goss texture in the product sheet. When the temperature of the hot-rolled sheet annealing is less than 850°C, a band texture formed during the hot rolling will remain. In such a case, it is difficult to obtain a primary recrystallization texture with a regulated size, which may hinder the development of secondary recrystallization.

Meanwhile, the upper limit of the temperature of the hot-rolled sheet annealing is preferably set to about 1130°C. When the temperature is over 1130°C, inhibitor-forming components, which have been unavoidably mixed in the steel, are dissolved and precipitated again in a non-uniform manner during cooling. In such a case also, it is difficult to obtain a primary recrystallization texture with a regulated size, which may hinder the development of secondary recrystallization. Further, When the annealing temperature is over 1130°C, the grain size after the annealing becomes too coarse. In this point also, such an annealing temperature is disadvantageous for obtaining a primary recrystallization texture with a regulated size.

The thus obtained steel sheet after hot-rolled sheet annealing is subjected to cold rolling once or cold rolling two or more times with intermediate annealing interposed therebetween so that a cold-rolled sheet with a final thickness (thickness of the product sheet) is obtained. As the cold rolling (final cold rolling) performed to obtain the final thickness, it is desirable to adopt warm rolling for rolling the steel sheet with its temperature increased to 80 to 150°C, or perform aging between rolling passes one or more times by applying aging treatment to the steel sheet with its temperature increased to 100 to 300°C between consecutive rolling passes, from a perspective of developing a Goss texture.

The thus obtained cold-rolled sheet with the final thickness is subjected to decarburization annealing which acts as primary recrystallization annealing. Such annealing is performed to allow the cold-rolled sheet with the rolling texture to undergo primary recrystallization so that the sheet has a primary recrystallization texture most suitable for secondary recrystallization, and to reduce the content of C in the steel to 0.0050 mass% or less, or preferably, 0.0030 mass% or less at which magnetic aging will not occur, and also to form an oxide film layer (subscales), which is needed to form a forsterite film, on the surface layer of the steel sheet. Therefore, the decarburization annealing is preferably performed in an oxidizing atmosphere containing $H_2$, such as a wet hydrogen-nitrogen atmosphere or a wet hydrogen-argon atmosphere, and at a soaking temperature in the range of 750 to 900°C. In addition, when the heating rate for the sheet is set to 100°C/s in the temperature range of 550 to 680°C when the sheet is heated to the soaking temperature, the primary recrystallization texture can be further improved. More preferably, the heating rate is set to 200°C/s or more. After the decarburization annealing, siliconizing treatment for increasing the Si content may be performed.

An annealing separating agent is applied to the surface of the steel sheet that has been subjected to the decarburization annealing. Then, the sheet is subjected to finishing annealing to undergo secondary recrystallization so that Goss-orientated grains ({110}<001>) are developed. As the annealing separating agent, an annealing separating agent mainly composed of MgO may be used to form a forsterite film on the surface of the steel sheet through the finishing annealing. At this time, adding an appropriate amount of an auxiliary agent, such as Ti oxide or a Sr compound, into the annealing separating agent can further promote the formation of the forsterite film. In particular, adding such an auxiliary agent for facilitating the uniform formation of the forsterite film is also advantageous in improving the stripping resistance of the film. Instead of using such an annealing separating agent mainly composed of MgO, it is also possible to use an annealing separating agent mainly composed of $Al_2O_3$, for example, to suppress the formation of a film.

The finishing annealing is preferably performed by heating the sheet to a temperature of 800°C or higher to cause secondary recrystallization. The heating rate up to 800°C is not limited to a particular value because it has no big influence on the magnetic property. The finishing annealing may be performed in an atmosphere, such as $N_2$, Ar, or $H_2$, or a mixed gas thereof. To further promote the secondary recrystallization, it is preferable to isothermally hold the sheet for 20 to 80 hours at around a temperature of 800 to 1000°C at which the secondary recrystallization occurs. However, it is not necessarily required to isothermally hold the sheet because similar effects can be obtained even when the sheet is gradually heated at a heating rate of 10°C/hr or less in such a temperature range. After the completion of the secondary recrystallization, it is preferable to heat the sheet to a temperature of 1100°C or higher to perform purification treatment in a hydrogen atmosphere because even a slight amount of impurities, if any, remaining in the final product sheet is precipitated, resulting in degradation of the magnetic property. A forsterite film is formed through such heating.

Next, unreacted portions of the annealing separating agent are removed from the steel sheet that has been subjected to the finishing annealing. Then, flattening annealing may be performed to shape the steel sheet. During the flattening annealing, or before or after the flattening annealing, an insulating film may be applied to the surface of the steel sheet and baked thereto. As the type of such an insulating film, a conventionally known insulating film can be used. For example, a tension-imparting-type insulating film described in Japanese Patent Laid-Open No. S48-39338 or Japanese Patent Laid-Open No. S50-79442 is preferably used that is formed by applying a coating solution containing phosphate, chromate, and colloidal silica to a steel sheet, and then baking it at a temperature of about 800°C.

Example 1

An experiment was conducted to produce a grain-oriented electrical steel sheet through several steps, using as a material a steel slab containing no inhibitor-forming components but having a composition of components including C: 0.03 to 0.05 mass%, Si: 3.3 to 3.4 mass%, Mn: 0.07 mass%, Al: 0.005 to 0.008 mass%, N: 0.006 mass% or less, O: 0.0060 mass% or less, and S and Se (in terms of S+0.405×Se): 0.0060 mass% or less, with the balance being Fe and unavoidable impurities. Specifically, a steel slab having the above composition of components was heated to a temperature of 1220°C, and was then subjected to hot rolling including four rough-rolling passes and a plurality of consecutive finishing-rolling passes so that a hot-rolled sheet with a thickness of 2.2 mm was formed. At this time, the second pass of the rough rolling was performed at a temperature of 1100°C, a rolling reduction of 35%, and a strain rate of 30 s$^{-1}$, and the third pass of the rough rolling was performed at a temperature of 1080°C, a rolling reduction of 35%, and a strain rate of 30 s$^{-1}$, and further, the interval between the second and third passes was set to 50 seconds. In addition, the finishing rolling was performed in the temperature range of 880 to 950°C, and the end temperature of the final pass of the finishing rolling was set to 880°C. The thus obtained hot-rolled sheet was cooled for 7 seconds in the temperature range of 750°C to 650°C, and was then wound into a coil at a temperature of 570°C. Next, the hot-rolled sheet was subjected to hot-rolled sheet annealing at a maximum temperature of 1020°C in a continuous annealing furnace. At this time, the heating time in the temperature range of 600°C to 700°C during the heating process was controlled to be 11 seconds.

Next, the thus obtained steel sheet after hot-rolled sheet annealing was subjected to cold rolling so that a cold-rolled sheet with a final thickness of 0.260 mm was obtained. At this time, the number of coils that had fractured during the cold rolling was counted. Note that a plurality of fractures that have occurred within a single coil, and a fracture that has occurred in an unsteady part at the front or rear end portion of a coil were each counted as one fracture of a coil.

Fig. 2 is a graph illustrating the occurrence rate of fractures during the cold rolling arranged based on (S+0.405×Se), the graph also showing the results of Fig. 1. As is clear from this graph, applying the method of hot rolling and the conditions of hot-rolled sheet annealing according to the present invention can reduce the occurrence rate of fractures during cold rolling when the content of S and Se, in terms of (S+0.405×Se), in the steel sheet is 0.0015 mass% or more, and that such an effect of reducing the occurrence rate of fractures is prominent when the content of S and Se, in terms of (S+0.405×Se), is 0.0025 mass% or more.

Next, the cold-rolled steel sheet was subjected to decarburization annealing doubling as primary recrystallization annealing at a heating rate of 250°C/s in the temperature range of 550 to 680°C during the heating process and at a soaking temperature of 800°C for a soaking time of 30 seconds so that the content of C in the steel sheet was reduced to 0.0050 mass% or less. Next, an annealing separating agent containing MgO: 95 mass% and $TiO_2$: 5 mass% was turned into a water slurry and then applied to the surface of the steel sheet before being dried. Then, the steel sheet was subjected to finishing annealing for causing secondary recrystallization. Next, unreacted portions of the annealing separating agent were removed from the steel sheet that had been subjected to the finishing annealing. Then, a coating solution containing phosphate, chromate, and colloidal silica at a mass ratio of 3:1:3 was applied to the surface of the steel sheet, and was baked thereto at 800°C so that a tension-imparting-type insulating film was formed thereon.

After a while, regarding the thus obtained product sheet, a test piece was collected from the central portion of the coil in the longitudinal direction and in the width direction for the measurement of the magnetic property. Consequently, the magnetic property was confirmed to be excellent as it was equivalent to or more than that before the present invention was applied.

Example 2

A steel slab, which had a composition of components including C: 0.04 mass%, Si: 3.3 mass%, and Mn: 0.05 mass%, and also including various components illustrated in Table 1, with the balance being Fe and unavoidable impurities was heated to a temperature of 1200°C. Then, the steel slab was subjected to hot rolling including five rough-rolling passes and a plurality of consecutive finishing-rolling passes so that a hot-rolled sheet with a thickness of 2.0 mm was obtained. Then, the hot-rolled sheet was wound into a coil at 500°C. At this time, the fourth and fifth passes of the rough rolling were performed at the same rolling reduction and at the same strain rate, and the first pass of the finishing rolling was performed in the temperature range of 850 to 950°C. Meanwhile, the rolling reduction and the strain rate in each of the fourth and fifth passes of the rough rolling, the interval between the fourth and fifth passes of the rough rolling, the interval between the first and second passes of the finishing rolling, the end temperature of the finishing rolling, and the cooling time in the temperature range of 750°C to 650°C after the finishing rolling were changed variously as illustrated in Table 2.

A test piece was collected from the central portion of the thus obtained hot-rolled sheet in the longitudinal direction and in the width direction. Then, the microstructure of a cross-section of the test piece in the thickness direction parallel with the rolling direction was observed with a SEM. Specifically, a region with a size of 50 mm$^2$, including the central portion of the cross-section of the test piece in the thickness direction along the rolling direction, and having a width that is 1/5 the thickness of the test piece, was observed to measure the number density of precipitates each having a major axis of 4 μm or more among precipitates of sulfide and selenide as well as complex precipitates of such compounds.

Next, the hot-rolled sheet was subjected to hot-rolled sheet annealing at a maximum temperature of 1000°C. At this time, the heating time in the temperature range of 600°C to 700°C during the heating process was changed as illustrated in Table 2. Next, the thus obtained steel sheet after hot-rolled sheet annealing was subjected to primary cold rolling at a temperature of 100°C to obtain a thickness of 1.7 mm using a reverse rolling mill, and was then subjected to intermediate annealing at 900°C × 1 minute, and was further subjected to secondary cold rolling using a reverse rolling mill again so that a cold-rolled sheet with a final thickness of 0.22 mm was obtained. At this time, the total occurrence rate of fractures during the primary cold rolling and the secondary cold rolling was counted as in Example 1. Note that in the secondary cold rolling, aging between rolling passes was performed at least once by holding a coil wound at 200°C for 0.5 hour or longer for aging treatment in the period between a plurality of consecutive passes. Then, the sheet was subjected to decarburization annealing doubling as primary recrystallization annealing at a heating rate of 300°C/s in the temperature range of 550°C to 680°C during the heating process and at a soaking temperature of 840°C for a soaking time of 60 seconds so that the content of C in the steel was reduced to 0.0050 mass% or less. Next, an annealing separating agent containing MgO: 95 mass% and $TiO_2$: 5 mass% was turned into a water slurry and then applied to the surface of the steel sheet before being dried. Then, the steel sheet was subjected to finishing annealing for causing secondary recrystallization. Next, unreacted portions of the annealing separating agent were removed from the steel sheet that had been subjected to the finishing annealing. Then, a coating solution containing phosphate, chromate, and colloidal silica at a mass ratio of 3:1:3 was applied to the surface of the steel sheet, and was baked thereto at 800°C so that a tension-imparting-type insulating film was formed thereon.

After a while, regarding the thus obtained product sheet, a test piece was collected from the central portion of the coil in the longitudinal direction and in the width direction for the measurement of the magnetic property (magnetic flux density $B_8$). Table 2 also illustrates the results. Consequently, as is clear from these results, a steel sheet produced under the conditions that match the present invention has not only a reduced occurrence rate of fractures during cold rolling but also an excellent magnetic property.

[Table 1]

| № | Chemical Composition (mass%) | | | | | | | | | | Remarks |
|---|---|---|---|---|---|---|---|---|---|---|---|
| | C | Si | Mn | Al | N | O | S | Se | S+0.405Se | Others | |
| 1 | 0.03 | 3.2 | 0.05 | 0.006 | 0.004 | 0.005 | 0.0012 | - | 0.0012 | - | Comparative Steel |
| 2 | 0.04 | 3.3 | 0.05 | 0.006 | 0.004 | 0.004 | 0.0012 | - | 0.0012 | - | Comparative Steel |
| 3 | 0.06 | 3.0 | 0.05 | 0.006 | 0.004 | 0.002 | 0.0012 | - | 0.0012 | - | Comparative Steel |
| 4 | 0.04 | 3.3 | 0.05 | 0.006 | 0.004 | 0.001 | 0.0020 | 0.0010 | 0.0024 | - | Invention Steel |
| 5 | 0.04 | 3.7 | 0.08 | 0.006 | 0.004 | 0.002 | 0.0020 | 0.0010 | 0.0024 | - | Invention Steel |
| 6 | 0.04 | 3.7 | 0.08 | 0.006 | 0.004 | 0.001 | 0.0020 | 0.0010 | 0.0024 | - | Invention Steel |
| 7 | 0.06 | 3.5 | 0.03 | 0.006 | 0.004 | 0.003 | 0.0030 | - | 0.0030 | - | Invention Steel |
| 8 | 0.06 | 3.5 | 0.03 | 0.006 | 0.004 | 0.002 | 0.0030 | - | 0.0030 | - | Invention Steel |
| 9 | 0.03 | 3.3 | 0.05 | 0.006 | 0.004 | 0.005 | 0.0030 | 0.0020 | 0.0038 | - | Invention Steel |
| 10 | 0.04 | 3.3 | 0.05 | 0.006 | 0.004 | 0.001 | 0.0030 | 0.0020 | 0.0038 | - | Invention Steel |
| 11 | 0.04 | 3.3 | 0.05 | 0.006 | 0.004 | 0.002 | 0.0050 | 0.0035 | 0.0064 | - | Comparative Steel |
| 12 | 0.04 | 3.3 | 0.15 | 0.005 | 0.003 | 0.003 | 0.0035 | - | 0.0035 | Ni:0.02, Sn:0.01, P:0.05 | Invention Steel |
| 13 | 0.04 | 3.3 | 0.15 | 0.005 | 0.003 | 0.002 | 0.0035 | - | 0.0035 | Ni:0.02, Sn:0.01, P:0.05 | Invention Steel |
| 14 | 0.05 | 3.4 | 0.05 | 0.004 | 0.003 | 0.002 | 0.0030 | - | 0.0030 | Sb:0.02, Mo:0.02, Cr:0.03 | Invention Steel |
| 15 | 0.05 | 3.4 | 0.05 | 0.004 | 0.003 | 0.001 | 0.0030 | - | 0.0030 | Sb:0.02, Mo:0.02, Cr:0.03 | Invention Steel |
| 16 | 0.04 | 3.3 | 0.10 | 0.008 | 0.004 | 0.001 | 0.0025 | 0.0010 | 0.0029 | Cu:0.05, B:0.001 | Invention Steel |
| 17 | 0.03 | 3.3 | 0.10 | 0.008 | 0.004 | 0.003 | 0.0025 | 0.0010 | 0.0029 | Cu:0.05, B:0.001 | Invention Steel |
| 18 | 0.03 | 3.3 | 0.05 | 0.007 | 0.004 | 0.003 | 0.0040 | - | 0.0040 | Ni:0.02, Sn:0.02, Bi:0.001 | Invention Steel |
| 19 | 0.04 | 3.3 | 0.05 | 0.003 | 0.003 | 0.003 | 0.0030 | 0.0030 | 0.0042 | P:0.04, Sb:0.02, Nb:0.003, Te:0.001 | Invention Steel |

(continued)

| № | Chemical Composition (mass%) | | | | | | | | | | Remarks |
|---|---|---|---|---|---|---|---|---|---|---|---|
| | C | Si | Mn | Al | N | O | S | Se | S+0.405Se | Others | |
| 20 | 0.04 | 3.3 | 0.05 | 0.007 | 0.004 | 0.002 | 0.0035 | - | 0.0035 | Ga:0.0008, Zn:0.0005, Ti:0.0005, Co:0.0012 | Invention Steel |

[Table 2]

| № | Hot rolling | | | | | | Heating Time (s) in Temperature Range of 600 to 700°C during Hot-rolled Sheet Annealing | The Number Density (Number/mm²) of S and Se Precipitates in Hot-rolled-sheet-annealed Sheet | Occurrence Rate (%) of Fractures during Cold Rolling | Magnetic Flux Density B₈ (T) of Product Sheet | Remarks |
|---|---|---|---|---|---|---|---|---|---|---|---|
| | 4th and 5th Passes of Rough Rolling | | | Finishing Rolling | | Cooling | | | | | |
| | Rolling Reduction (%) | Strain Rate (s⁻¹) | Interval (s) between Passes | Interval (s) between 1st and 2nd Passes | Finishing Rolling Temperature (°C) | Cooling Time (s) in Temperature Range of 750 to 650°C | | | | | |
| 1 | 30 | 25 | 70 | 2.0 | 960 | 8 | 10 | 0.08 | 13 | 1.899 | Comparative Example |
| 2 | 30 | 25 | 70 | 2.0 | 880 | 7 | 10 | 0.07 | 2 | 1.909 | Comparative Example |
| 3 | 30 | 25 | 45 | 2.0 | 880 | 7 | 10 | 0.05 | 2 | 1.911 | Comparative Example |
| 4 | 18 | 13 | 55 | 2.0 | 850 | 9 | 9 | 0.36 | 6 | 1.902 | Comparative Example |
| 5 | 25 | 21 | 50 | 3.0 | 850 | 12 | 15 | 0.11 | 4 | 1.912 | Invention Example |
| 6 | 25 | 21 | 50 | 3.0 | 850 | 6 | 8 | 0.04 | 1 | 1.913 | Invention Example |
| 7 | 35 | 30 | 65 | 0.5 | 870 | 10 | 12 | 0.32 | 15 | 1.888 | Comparative Example |
| 8 | 35 | 30 | 35 | 5.0 | 870 | 10 | 8 | 0.02 | 1 | 1.914 | Invention Example |
| 9 | 15 | 16 | 40 | 3.0 | 880 | 11 | 7 | 0.31 | 7 | 1.901 | Comparative Example |
| 10 | 32 | 30 | 40 | 3.0 | 880 | 11 | 7 | 0.08 | 2 | 1.913 | Invention Example |
| 11 | 30 | 28 | 45 | 5.0 | 900 | 5 | 10 | 0.35 | 8 | 1.908 | Comparative Example |

(continued)

| № | Hot rolling | | | | | | Heating Time (s) in Temperature Range of 600 to 700°C during Hot-rolled Sheet Annealing | The Number Density (Number/mm²) of S and Se Precipitates in Hot-rolled-sheet-annealed Sheet | Occurrence Rate (%) of Fractures during Cold Rolling | Magnetic Flux Density $B_8$ (T) of Product Sheet | Remarks |
|---|---|---|---|---|---|---|---|---|---|---|---|
| | 4th and 5th Passes of Rough Rolling | | | Finishing Rolling | | Cooling | | | | | |
| | Rolling Reduction (%) | Strain Rate (s⁻¹) | Interval (s) between Passes | Interval (s) between 1st and 2nd Passes | Finishing Rolling Temperature (°C) | Cooling Time (s) in Temperature Range of 750 to 650°C | | | | | |
| 12 | 28 | 25 | 55 | 3.0 | 870 | 8 | 8 | 0.03 | 2 | 1.920 | Invention Example |
| 13 | 28 | 25 | 55 | 0.5 | 870 | 8 | 8 | 0.05 | 2 | 1.917 | Invention Example |
| 14 | 33 | 27 | 53 | 3.0 | 860 | 9 | 9 | 0.01 | 1 | 1.922 | Invention Example |
| 15 | 33 | 27 | 53 | 0.8 | 960 | 11 | 11 | 0.04 | 4 | 1.915 | Invention Example |
| 16 | 26 | 13 | 90 | 4.0 | 860 | 13 | 11 | 0.39 | 16 | 1.900 | Comparative Example |
| 17 | 26 | 22 | 43 | 4.0 | 860 | 4 | 5 | 0.03 | 2 | 1.921 | Invention Example |
| 18 | 24 | 23 | 28 | 4.0 | 840 | 6 | 9 | 0.08 | 1 | 1.916 | Invention Example |
| 19 | 24 | 23 | 28 | 4.0 | 840 | 6 | 9 | 0.07 | 3 | 1.913 | Invention Example |
| 20 | 25 | 23 | 30 | 4.0 | 860 | 5 | 8 | 0.07 | 2 | 1.920 | Invention Example |

Claims

1. A method for producing a grain-oriented electrical steel sheet, comprising:

performing hot rolling on a steel slab having a composition of components including C: 0.03 to 0.08 mass%, Si: 2.0 to 5.0 mass%, Mn: 0.005 to 1.0 mass%, Al: less than 0.010 mass%, N: 0.006 mass% or less, O: 0.0060 mass% or less, and S and Se (in terms of S+0.405×Se) in a range of 0.0015 to 0.0060 mass%, with a balance being Fe and unavoidable impurities so as to obtain a hot-rolled sheet, the hot rolling including at least two consecutive passes performed in a temperature range of 1050 to 1150°C under conditions such that an interval between the two passes is 60 seconds or less, a rolling reduction in each pass is 20% or more, and a strain rate in each pass is 15 $s^{-1}$ or more;
subjecting the hot-rolled sheet to hot-rolled sheet annealing;
performing cold rolling once or performing cold rolling two or more times with intermediate annealing interposed between each rolling to obtain a cold-rolled sheet;
subjecting the cold-rolled sheet to decarburization annealing which acts as primary recrystallization annealing; and
performing finishing annealing.

2. The method for producing a grain-oriented electrical steel sheet according to claim 1, wherein:

the hot rolling includes at least one pass performed in a temperature range of 850 to 950°C,
the hot-rolled sheet annealing after the hot rolling is performed at a temperature of 850°C or higher, and
a sum of a cooling time in a temperature range of 750°C to 650°C during a cooling process performed after the hot rolling and a heating time in a temperature range of 600°C to 700°C during a heating process of the hot-rolled sheet annealing is 20 seconds or less.

3. The method for producing a grain-oriented electrical steel sheet according to claim 2, further comprising, after the at least one pass of the rolling performed in the temperature range of 850 to 950°C, holding the steel sheet as is for 1.0 second or longer.

4. The method for producing a grain-oriented electrical steel sheet according to any one of claims 1 to 3, wherein the steel slab further includes, in addition to the composition of components, at least one group of components selected from the following groups A to C:

- a group A: Ni: 1.50 mass% or less,
- a group B: at least one element selected from the group consisting of Sn: 0.50 mass% or less, Sb: 0.50 mass% or less, Cu: 0.50 mass% or less, Mo: 0.50 mass% or less, Co: 0.0100 mass% or less, P: 0.50 mass% or less, Cr: 1.50 mass% or less, B: 0.0200 mass% or less, and Bi: 0.0200 mass% or less, and
- a group C: at least one element selected from the group consisting of Nb: 0.0200 mass% or less, Ti: 0.0200 mass% or less, Te: 0.0200 mass% or less, Ga: 0.0100 mass% or less, and Zn: 0.500 mass% or less.

5. A hot-rolled sheet for a grain-oriented electrical steel sheet, comprising a composition of components including C: 0.03 to 0.08 mass%, Si: 2.0 to 5.0 mass%, Mn: 0.005 to 1.0 mass%, Al: less than 0.010 mass%, N: 0.006 mass% or less, O: 0.0060 mass% or less, and S and Se (in terms of S+0.405×Se) in a range of 0.0015 to 0.0060 mass%, with a balance being Fe and unavoidable impurities,
**characterized in that**:
the number density of precipitates each having a major axis of 4 $\mu$m or more among precipitates of sulfide and selenide and complex precipitates of such compounds is 0.30/mm² or less in a region with a size of 50 mm² including a central portion of a cross-section of the sheet in a thickness direction along a rolling direction, and having a width that is 1/5 a thickness of the sheet.

6. The hot-rolled sheet for a grain-oriented electrical steel sheet according to claim 5, further comprising, in addition to the composition of components, at least one group of components selected from the following groups A to C:

- a group A: Ni: 1.50 mass% or less,
- a group B: at least one element selected from the group consisting of Sn: 0.50 mass% or less, Sb: 0.50 mass% or less, Cu: 0.50 mass% or less, Mo: 0.50 mass% or less, Co: 0.0100 mass% or less, P: 0.50 mass% or less, Cr: 1.50 mass% or less, B: 0.0200 mass% or less, and Bi: 0.0200 mass% or less, and
- a group C: at least one element selected from the group consisting of Nb: 0.0200 mass% or less, Ti: 0.0200 mass% or less, Te: 0.0200 mass% or less, Ga: 0.0100 mass% or less, and Zn: 0.500 mass% or less.

[Fig. 1]

[Fig. 2]

## INTERNATIONAL SEARCH REPORT

| | International application No. |
|---|---|
| | **PCT/JP2023/030414** |

| **A.** | **CLASSIFICATION OF SUBJECT MATTER** |
|---|---|

*C21D 8/12*(2006.01)i; *C22C 38/00*(2006.01)i; *C22C 38/60*(2006.01)i; *H01F 1/147*(2006.01)i
FI: C21D8/12 C; C22C38/00 303U; C22C38/60; H01F1/147 175

According to International Patent Classification (IPC) or to both national classification and IPC

| **B.** | **FIELDS SEARCHED** |
|---|---|

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 5-105956 A (KAWASAKI STEEL CORP) 27 April 1993 (1993-04-27) | 5-6 |
| | claims, paragraphs [0001]-[0020], [0030]-[0039], fig. 2(b) | |
| A | | 1-4 |
| A | JP 2002-212639 A (NIPPON STEEL CORP) 31 July 2002 (2002-07-31) entire text | 1-6 |
| A | JP 2003-226916 A (JFE STEEL KK) 15 August 2003 (2003-08-15) entire text | 1-6 |
| A | JP 2014-500399 A (POSCO) 09 January 2014 (2014-01-09) entire text, all drawings | 1-6 |
| A | US 2013/0174940 A1 (CICALE, Stefano) 11 July 2013 (2013-07-11) entire text, all drawings | 1-6 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/030414**

| Patent document cited in search report | | | Publication date (day/month/year) | Patent family member(s) | | | Publication date (day/month/year) |
|---|---|---|---|---|---|---|---|
| JP | 5-105956 | A | 27 April 1993 | (Family: none) | | | |
| JP | 2002-212639 | A | 31 July 2002 | (Family: none) | | | |
| JP | 2003-226916 | A | 15 August 2003 | (Family: none) | | | |
| JP | 2014-500399 | A | 09 January 2014 | US entire text, all drawings WO EP KR CN | 2013/0180634 2012/087016 2657356 10-2012-0071820 103270180 | A1 A2 A2 A A | |
| US | 2013/0174940 | A1 | 11 July 2013 | WO entire text, all drawings EP BR | 2011/114178 2547799 112012023611 | A1 A2 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 40015644 A
- JP 51013469 A
- JP 2000129356 A
- JP 2003226916 A
- JP S4839338 A
- JP S5079442 A